# EUROPÄISCHE PATENTSCHRIFT

(11) **EP 2 845 672 B1**
(45) Veröffentlichungstag und Bekanntmachung des Hinweises auf die Patenterteilung: **30.01.2019**
(21) Anmeldenummer: 14183745.0
(22) Anmeldetag: 05.09.2014
(51) Int. Cl.: B23B 51/02, B28D 1/14

(54) **Bohrer**
Drill bit
Foret

(30) Priorität: 06.09.2013 DE 102013109796
(43) Veröffentlichungstag der Anmeldung: 11.03.2015
(73) Patentinhaber: DreBo Werkzeugfabrik GmbH, D-88361 Altshausen (DE)
(72) Erfinder: Stumpp, Martin, 88214 Ravensburg (DE); Zürn, Alexander, 88361 Altshausen (DE); Kehrle, Peter, 88400 Biberach (DE); Berg, Tobias, 88630 Pullendorf (DE)
(74) Vertreter: Baronetzky, Klaus

(56) Entgegenhaltungen:
- DE-A1- 10 053 342
- DE-U1- 20 108 179

## Beschreibung

Die Erfindung betrifft einen Bohrer, gemäß dem Oberbegriff von Anspruch 1, insbesondere einen Gesteinsbohrer mit einem mit einem Hartmetalleinsatz ausgerüsteten Bohrerkopf.

Ein derartiger Bohrer ist beispielsweise aus der DE 197 27 070 C2 bekannt. Dieser Bohrer mit Kernverstärkung hat sich in der Praxis als besonders leistungsfähig und langlebig herausgestellt.

Er wird auch heutzutage noch als sogenannter Vierschneider eingesetzt und bietet die Möglichkeit, eine gute Stabilität mit einer relativ großen Bohrmehlabfuhrnut zu verbinden. Die Kernverstärkung ermöglicht es, mit einem recht dünnen Kern zu arbeiten, was eine entsprechend große Bohrmehlabfuhrnut ergibt, aber durch die wiederum vorgenommene Verstärkung des Kerns dennoch die Bruchneigung zu reduzieren.

Unter Kernverstärkung versteht man eine Konvexität in Richtung der Bohrerlängsachse betrachtet, also einen balligen Aufbau des Bohrerkerns innerhalb jeder Bohrmehlabfuhrnut, betrachtet bei einem Längschnitt des Bohrers.

Aus der DE 100 53 342 A1 ist ein Wendelbohrer bekannt, der als Bohrwerkzeug in ein drehendes und optional schlagendes Werkzeuggerät eingesetzt wird, vorteilhaft ausgebildet für den schlagend abrasiven Abtrag von Gestein oder gesteinähnlichem Material, wie Beton.

Demgegenüber liegt der Erfindung die Aufgabe zugrunde, einen Bohrer gemäß dem Oberbegriff von Anspruch 1 zu schaffen, dessen Langzeitstabilität und Bruchsicherheit noch weiter erhöht ist.

Diese Aufgabe wird erfindungsgemäß durch Anspruch 1 gelöst. Vorteilhafte Weiterbildungen ergeben sich aus den Unteransprüchen.

Erfindungsgemäß ist ein Bohrer mit einer Kernverstärkung vorgesehen, dessen Rückenstegbreite am bohrerkopfseitigen Ende geringer als am schaftseitigen Ende der Stege oder der Bohrerwendel ist. Hierdurch lässt sich mit überraschend einfachen Mitteln die Neigung der Bohrer, am Übergang zwischen dem zylindrischen Teil des Bohrer an dessen schaftseitigen Ende und der Bohrerwendel zu brechen, beseitigen. Durch die Zunahme der Rückenbreite an dieser Stelle oder Verbreiterung der Rückenstege wird die Kerbwirkung an dieser Stelle stark reduziert.
Zugleich wird der Bohrer an dieser Stelle steifer, und übeträgt daher die Schlagenergie besser zur Bohrerspitze.
Die Bohrerspitze ist in an sich bekannter Weise mit einem Bohrerkopf mit einem Hartmetalleinsatz versehen. Der erfindungsgemäße Bohrer ist damit besonders für Gestein und dergleichen geeignet.
Erfindungsgemäß ist es vorgesehen, die Kernverstärkung am schaftseitigen Ende der Wendel schlanker auszugestalten, insbesondere weniger ballig. Die Steifigkeit und Stabilität des Kernes wird hierdurch nicht oder nur in ganz geringem Umfang beeinflußt, denn die absolute Tiefe der Bohrmehlabfuhrnut an der Spitze der Kernverstärkung verbleibt unverändert. Jedoch wird durch die schlankere Ausgestaltung mehr Raum für die Bohrmehlabfuhr geschaffen, in dem das Volumen der Bohrmehlabfuhrnut seitlich der Mitte der Kernverstärkung noch erhöht wird. Dies kompensiert bei weitem die Reduktion des für die Bohrmehlabfuhr zu Verfügung stehenden Volumen oder Freiraum pro axialen Längenabschnitt des Bohrers im Bereich des schaftseitigen Endes der Wendel.
Am bohrerkopfseitigen Ende der Wendel ist die Breite der Rückenstege dementsprechend geringer als am schaftseitigen Ende. Hierdurch ist der Bohrer an sich dort weniger steif. Insbesondere durch die balligere Ausgestaltung der Kernverstärkung, also einer Ausgestaltung mit größeren Radien der Konvexität im Längsschnitt des Bohrers betrachtet, steht dort jedoch ein massereicherer Wendelabschnitt zur Verfügung, der dementsprechend die eingeleitete Schlagenergie besser überträgt.
Insofern ist die Kernverstärkung erfindungsgemäß steifer an der Stelle ausgebildet, an der der Bohrer durch eine schwächere Wendel geschwächt ist, und weniger steif an der Stelle, an der der Bohrer durch eine steifere und einen breiteren Rücken aufweisende Wendel steifer ist.
Damit lässt sich in überraschend einfacher Weise die Bruchneigung der bislang verwendeten Bohrer, insbesondere der Bohrer ohne Kernverstärkung, an den Stellen kompensieren, an denen der Bohrer zum Brechen neigt, nämlich insbesondere an dem Übergang zwischen Schaft und Bohrerwendel.
Ein weiterer Vorteil ergibt sich aus der Reduktion der Rückenbreite im vorderen Bereich des Bohrers. Durch die schmaleren Rückenstege besteht eine geringere Kontaktfläche zwischen Bohrloch und Bohrer. Es ergibt sich eine geringere Reibung, was zur Erhöhung der Bohrgeschwindigkeit führt, gerade auch während der Erstellung eines Bohrlochs. Der vordere Teil des Bohrers ist bereits beim Beginn der Bohrung in Kontakt mit dem Bohrloch, und dessen Reibung entscheiden maßgeblich über die Bohrleistung.
Durch den im rückwertigen Bereich vergrößerten Nutraum steht mehr Volumen für die Bohrmehlaufnahme zur Verfügung. Hierdurch wird die Neigung zu Verpuffungen bei einem nahezu fertiggestellten Bohrloch geringer.
Besonders vorteilhaft ist auch, dass durch den steileren Spiralwinkel der Bohrerwendel die von dem Schaftende auf den Bohrer eingeleitete Stoßwelle besser in die Bohrerwendel eingeleitet werden kann, wodurch mehr Schlagenergie in den Bohrerkopf eingeleitet wird, was die Bohrerleistung erhöht.
In vorteilhafter Ausgestaltung ist die Formänderung der Kernverstärkung symmetrisch, also auf beiden Flanken der Kernverstärkung spiegelbildlich zueinander. Hierdurch wird die maximal mögliche Volumenvergrößerung erreicht, die gleichzeitig eine Schwächung der Kernverstärkung verhindert.
In weiterer vorteilhafter Ausgestaltung ist die Kernstärke des Bohrers, gemessen an der Spitze oder Mitte der Kernverstärkung, über den Verlauf der Wendel konstant. Hierdurch wird eine Schwächung des Bohrers und eine Reduktion der Steifigkeit aufgrund einer etwaigen Reduktion des Kerndurchmessers vermieden.

Vorzugsweise wird eine besonders vorteilhafte Kombination einer variablen Kernverstärkung mit einer in Form der variablen Rückenbreite des Stegs variablen Bohrerwendel kombiniert.

Vorzugsweise ändert sich insofern die Form der Kernverstärkung über den Verlauf des Bohrers. Die Fläche der Kernverstärkung ist in günstiger Ausgestaltung zum schaftseitigen Ende der Wendel reduziert.
Durch die Änderung der Stegbreite über den Verlauf der Bohrerwendel hat der Steg über den Verlauf der Bohrerwendel betrachtet eine unterschiedliche Masse. Dies führt überraschenderweise dazu, Resonanzen aufgrund der eingeleiteten Längsimpulse der Schlagenergie zu vermeiden.

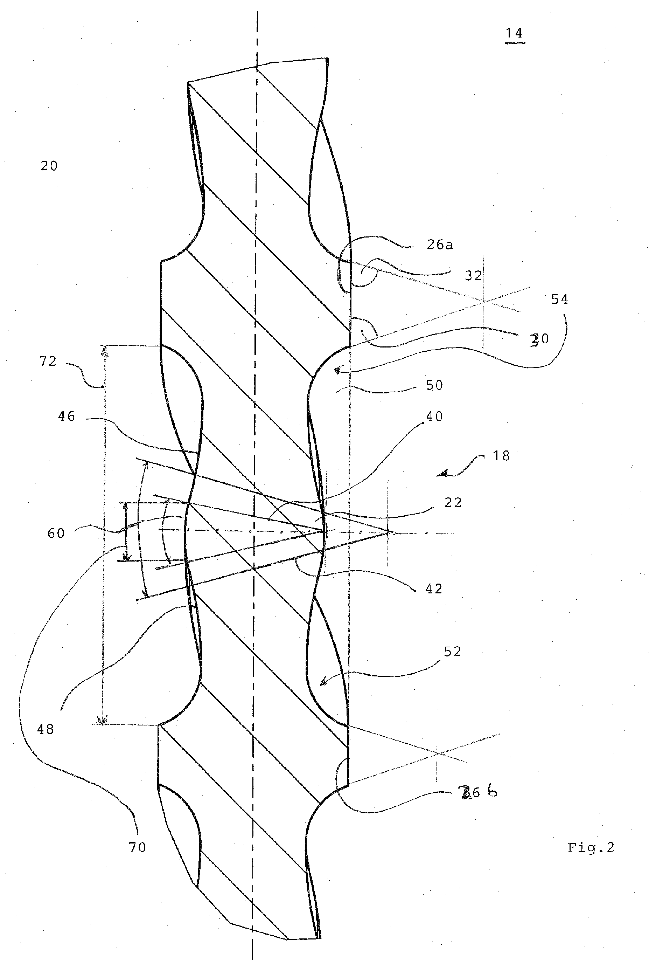

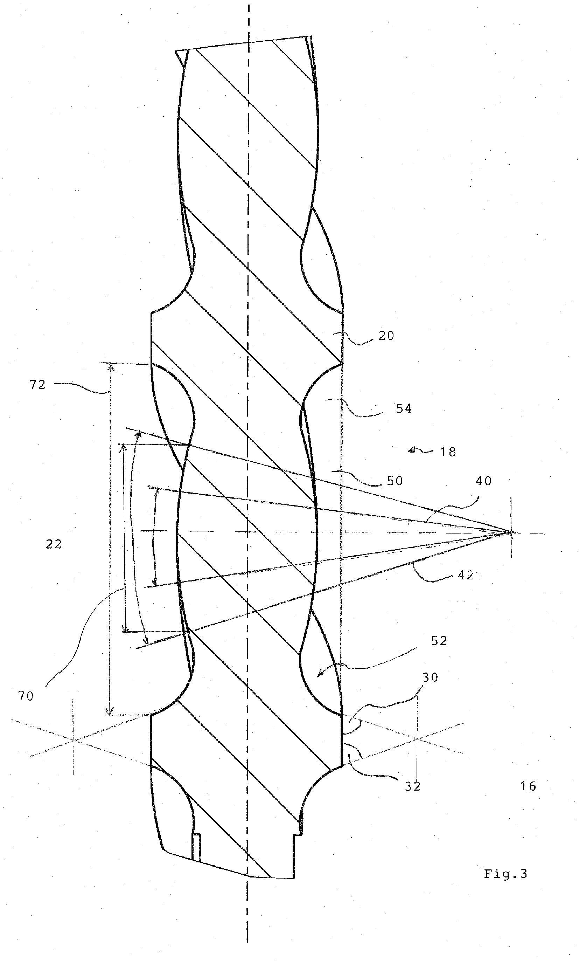

Weitere Vorteile, Einzelheiten und Merkmale ergeben sich aus der nachfolgenden Beschreibung zweier Ausführungsbeispiele der Erfindung anhand der Zeichnung. Es zeigen:
Fig. 1 eine Seitenansicht eines wesentlichen Teils einer Ausführungsform eines erfindungsgemäßen Bohrers;
Fig. 2 eine vergrößerte Längschnittansicht eines Details des Bohrers gemäß Fig. 1, im rückwärtigen oder schaftendseitigen Bereich des Bohrers;
Fig. 3 eine Schnittansicht ähnlich zu Fig. 2, jedoch in einem bohrerkopfseitigen oder vorderen Endbereich des Bohrers gemäß Fig. 1;
   und
Fig. 4 eine Ansicht einer weiteren Ausführungsform eines erfindungsgemäßen Bohrers, in einer Darstellung entsprechend Fig. 1.

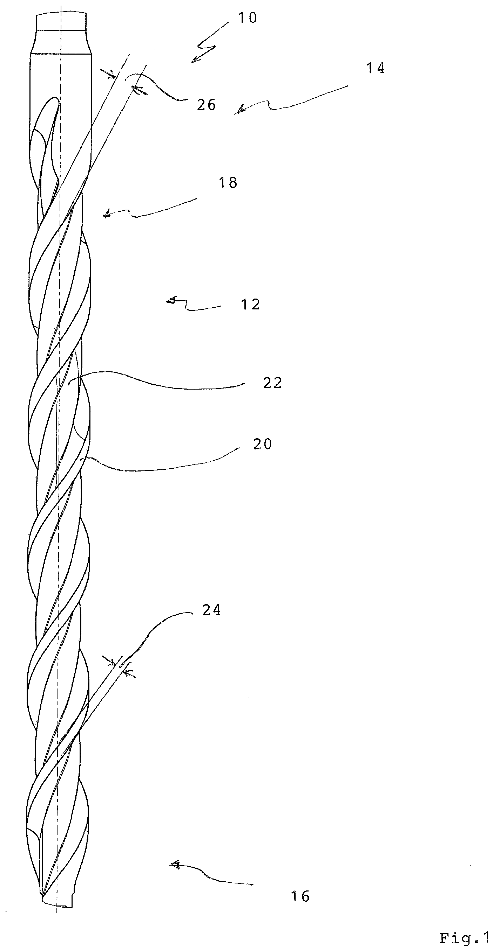

Der in Fig. 1 dargestellte Bohrer 10 weist eine Bohrerwendel 12 auf, die sich von einem Schaftende 14, das auch als rückseitiges Ende bezeichnet wird, zu einem vorderen Ende oder Bohrerkopfende 16 erstreckt.
Der Bohrer 10 weist im Bereich der Wendel in an sich bekannter Weise eine Bohrmehlabfuhrnut 18 auf, die spiralig umlaufend ausgebildet ist. In ebenfalls an sich bekannter Weise ist ein Rückensteg 20 ebenfalls gleichsinnig spiralig umlaufend ausgebildet, welcher Rückensteg 20 erfindungsgemäß in besonderer Weise ausgebildet ist, wie es nachstehend beschrieben ist.
Die Bohrmehlabfuhrnut 18 weist eine Kernverstärkung 22 auf. Die Kernverstärkung 22 ist im Bereich des Bohrerkopfendes 16 balliger und im Bereich des Schaftendes 14 spitzer oder schlanker im Sinne eines geringeren Querschnitts der Kernverstärkung. Zur Form der Kernverstärkung 22 im Einzelnen sei auf die Figuren 2 und 3 verwiesen.

Erfindungsgemäß ist die Breite 24 des Stegs 20 im Bereich des Bohrerkopfes 16 relativ schmal und die Breite 26 des Steges 20 im Bereich des Schaftendes 24 groß. In dem dargestellten Ausführungsbeispiel, das einen Bohrer mit dem Nennurchmesser 14mm zeigt, beträgt die Breite 24 am Bohrerkopfende 16 2mm und die Breite 26 am Schaftende 14 5mm.

Es versteht sich, dass das Verhältnis der Rückenbreiten 24 zu 26 in weiten Bereichen an die Erfordernisse anpassbar ist. Beispielsweise kann das Breitenverhältnis auch 1 zu 1,2 oder aber bis zu 1 zu 6 betragen. Bevorzugt ist das Rückenstegbreitenverhältnis zwischen 1 zu 1,5 und 1 zu 3,5, besonders bevorzugt zwischen 1 zu 2 und 1 zu 3.

Erfindungsgemäß ist es ferner vorgesehen, dass sich die Kernverstärkung 22 in ihrer Ausgestaltung gegensinnig zur Änderung der Breite 24 bzw. 26 ändert. Die Kernverstärkung 22 ist insofern im Bereich des Bohrerkopfendes 16 breiter, an der Stelle also, an der die Breite 24 des Stegs 20 schmaler ist, und im Bereich des Schaftendes 14, an welcher Stelle die Breite 26 des Stegs 20 breiter ist, schmaler. Dies ergibt die erwünschte Kompensation der relativ schmaleren Bohrmehlabfuhrnut 18 im Bereich des Schaftendes 14 aufgrund der höheren Breite 24 und schafft insofern eine relative Vergrößerung der Bohrmehlabfuhrnut 18, trotz Zunahme der Steifheit.

Aus Fig. 2 ist ersichtlich, in welcher Weise dort, also im Bereich 14 des Schaftendes, die Bohrmehlabfuhrnut 18 und die Ausgestaltung des Stegs 20 beschaffen ist und sich über den Verlauf ändert.

Wie aus Fig. 2 ersichtlich ist, sind knapp zwei Gänge der Wendel dargestellt. Die schaftendseitige Stegbreite 26a ist größer als die dem Bohrerkopf zugewandte Stegbreite 26b.

Die Bohrmehlabfuhrnut 18 weist symmetrische Auslaufwinkel 30 und 32 auf. Hiermit sind die Endwinkel der Bohrmehlabfuhrnut 18 zum Steg 20 hin gemeint, also am Übergang zwischen der Bohrmehlabfuhrnut 18 und dem Steg 20.

Der Auslaufwinkel 30 an dem bohrerkopfseitigen Ende des Stegs 20 ist dementsprechend genau so groß wie der Auslaufwinkel 32 an dem schaftseitigen Ende des Stegs 20.

In dem dargestellten Ausführungsbeispiel beträgt dieser Winkel 72°, lässt sich jedoch in weiten Bereichen an die Erfordernisse anpassen. Um den Verschleiß zu begrenzen und ein Klemmen des Bohrers zu vermeiden, sollte der Winkel jedenfalls nach Möglichkeit deutlich geringer als 85° sein, bevorzugt unter 80° betragen.

Die Bohrmehlabfuhrnut 18 ist mit der Kernverstärkung 22 in besonderer Weise ausgestaltet. In dem Bereich 14 des Bohrers ist die Kernverstärkung 22 recht schlank. Ihr Zentralradius 40, also der Radius der Konvexität in der Ansicht gemäß Fig.2 in unmittelbare Nähe der Zentralmitte der Kernverstärkung 22, ist recht gering. In dem dargestellten Ausführungsbeispiel beträgt er deutlich weniger als der Nenndurchmesser des Bohrers, nämlich etwa die Hälfte des Nenndurchmessers. Dieser Radius wird über die mittleren zentralen 20° der konvexen Kernverstärkung 22 erfasst.

Der Seitenradius 42 ist demgegenüber deutlich größer. Im dargestellten Ausführungsbeispiel beträgt er etwas weniger als der Nenndurchmesser des Bohrers, der aufgrund der in an sich bekannter Weise vorragenden Hartmetallspitze etwas größer als der Durchmesser des Bohrers im Bereich der Stege 20 ist. Er kann aber auch etwas größer als der Nenndurchmesser sein und lässt sich bevorzugt als ein Winkel von etwa 35° über die zentrale Konvexität der Kernverstärkung 22 ermitteln.

Durch diese Ausgestaltung sind die Flanken der Kernverstärkung 22, nämlich die dem Bohrerkopf zugewandte Vorlaufflanke 46 und die Rücklaufflanke 48, gerade abfallend und in sich flach. Der Schrägstellungswinkel gegen die Bohrerachse beträgt zwischen 5 und 18 Grad und im dargestellten Ausführungsbeispiel etwa 10 Grad.

Durch diese Ausgestltung mit flachen Flanken wird die Kernverstärkung 22 spitzer und schmaler.

Dies kommt dem Volumen 50 der Bohrmehlabfuhrnut 18 zugute, das dadurch im Bereich der seitlichen Hohlkehlen 52 und 54 der Bohrmehlabfuhrnut 18 vergrößert wird.

Von dem Auslaufwinkel 30 bzw. 32 aus betrachtet, hat die Bohrmehlabfuhrnut 18 im Bereich der Hohlkehlen 52 und 54 einen evolventen haften Aufbau, und zwar nahezu bis zu dem Punkt, an dem sie in das Zentrum 60 der Kernverstärkung 22 übergeht.

Eine demgegenüber andere Bohrmehlabfuhrnut 18 ist aus Fig. 3 ersichtlich; Fig. 3 zeigt die Ausgestaltung der Bohrmehlabfuhrnut 18 und der Kernverstärkung 22 im Bereich des bohrerkopfseitigen Endes der Wendel. Hier ist die Kernverstärkung 22 in der Ansicht gemäß Fig. 3, also im Längschnitt durch den Bohrer betrachtet, wesentlich balliger. Dies führt dazu, dass der Zentralradius 40 und der Seitenradius 42 zusammenfallen und insgesamt wesentlich größer sind als die betreffenden Radien gemäß Fig. 2. Im dargestellten Ausführungsbeispiel sind beide Radien etwa so groß wie der doppelte Nenndurchmesser des Bohrers 10.

Die Hohlkehlen 52 und 54 verlaufen so, dass sie von den Auslaufwinkeln 30 bzw. 32 betrachtet recht rasch in die Konvexität der Kernverstärkung 22 übergehen. Unmittelbar anschließend an den konkaven Bereich der Hohlkehlen 52 und 54 schließt sich bei dieser Ausgestaltung der konvexe Bereich der Kernverstärkung 22 an. Der Bereich der Konvexität der Kernverstärkung 22 nimmt bei dieser Ausgestaltung eine Konvexitätsbreite 70 ein, die gegenüber der Konvexitätsbreite 70 gemäß Fig. 2 wesentlich vergrößert ist. Sie beträgt deutlich mehr als die Hälfte der Breite 72 der Bohrmehlabfuhrnut 18. Das Breitenverhältnis beträgt an dem kopfseitigen Ende gemäß Fig. 3 etwas 0.8 zu 1, während es an dem schaftseitigen Ende etwa 0.2 zu 1 beträgt.

Es versteht sich, dass das Verhältnis der Konvexitätsbreite 70 zur Bohrmehlabfuhrnutbreite 72 in weiten Verhältnissen an die Erfordernisse anpassbar ist und bei einer relativ höheren Konvexitätsbreite eine balligere Ausgestaltung der Kernverstärkung 22 immanent ist.

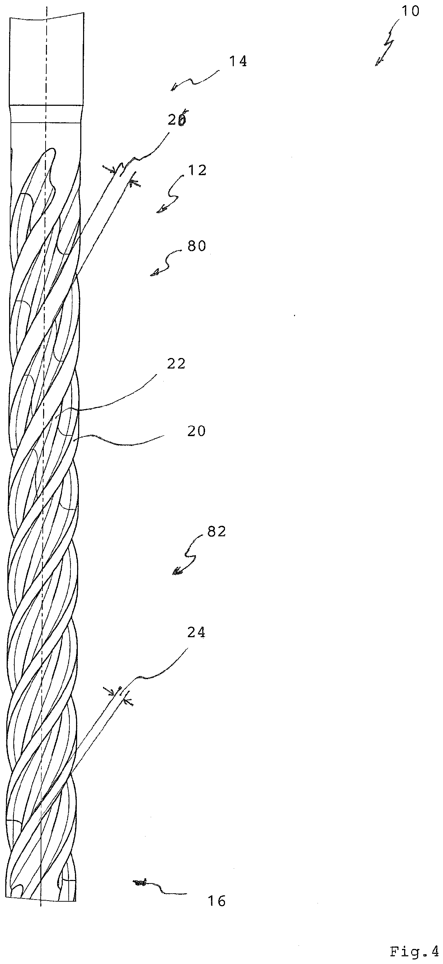

Während bei den hier dargestellten Bohreren eine zweiwendelige Spirale vorgesehen ist, die typischerweise bei sogenannten Zweischneidern verwendet wird, versteht sich, dass an Stelle dessen die gleichen Wirkungen sich bei vierwendeligen Spiralen oder Bohrerwendeln erzielen lassen, wie sie bei Vierschneidern typisch sind. Eine entsprechend ausgestaltete Bohrerwendel 12 ist aus Fig. 4 ersichtlich.

Hier wie auch in den übrigen Figuren weisen gleiche Bezugszeichen auf gleiche Teile hin und bedürfen keiner weiteren Erwähnung. Das Breitenverhältnis der Breiten 24 und 26 der Stege 20 beträgt hier 1 zu 2, und die Kernverstärkung 22 ändert sich wie vorstehend beschrieben gegensinnig zur Breitenänderung der Stege 20.

Gleiches gilt sinngemäß auch für Dreischneider und andere Mehrschneider.

Wie aus Fig. 4 ersichtlich ist, ist das rückwärtige Drittel 80 mit einer größeren Stegbreite 26 ausgestattet, und die beiden vorderen Drittel 82 des Bohrers 10 weisen eine geringere Stegbreite 24 auf. Dazwischen erstreckt sich ein kontinuierlicher Übergang.

Hieraus ergibt sich, dass die Formänderung der Kernverstärkung 22 und die Änderung der Stegbreiten 24 bzw. 26 nicht kontinuierlich und stetig über den Verlauf des Bohrers 10 nun erfolgen muss, sondern eine abschnittsweise Änderung gegebenenfalls auch ausreichend ist.

## Patentansprüche

1. Bohrer, mit einer Bohrerwendel (12), bei welcher sich zueinander symmetrische Stege (20) schraubenwendelförmig um einen Kern erstrecken, wobei zwischen den Stegen (20) Nuten (18) verbleiben, deren Breite (72) die Rückenbreite (24) der Stege (20) übersteigt und wobei die Nuten (18) an ihren Nutengrund eine konvexe Kernverstärkung (22) aufweisen, **dadurch gekennzeichnet, dass** die Breite (24) der Stege (20) am bohrerkopfseitigen Ende (16) geringer als am schaftseitigen Ende (14) der Wendel (12) ist und mindestens bereichsweise zunimmt und dass die Kernverstärkung (22) am bohrerkopfseitigen Ende (16) einen größeren Querschnitt als am schaftseitigen Ende (14) aufweist, insbesondere größere Radien (40,42) aufweist und balliger ist.

2. Bohrer nach Anspruch 1, **dadurch gekennzeichnet, dass** die Kernverstärkung (22) des Bohrers (10) im Bereich des Bohrerkopfes einen im Wesentlichen konstanten Radius (40,42) über ihren Verlauf innerhalb der Bohrmehlabführnut (18) aufweist.

3. Bohrer nach einem der vorhergehenden Ansprüche, **dadurch gekennzeichnet, dass** die Kernverstärkung (22) im Bereich des Schaftendes (14) des Bohrers (10) über ihren Verlauf variable Radien (40,42) aufweist, wobei der Radius (40) im Zentrum der Kernverstärkung (22) am geringsten ist und an den beiden Flanken der Kernverstärkung (22) vom Zentrum (60) ausgehend zunimmt.

4. Bohrer nach einem der vorhergehenden Ansprüche, **dadurch gekennzeichnet, dass** die zum bohrerschaftseitigen Ende (14) hin zunehmende Wendelsteigung ausschließlich durch Zunahme der Stegbreite (24,26) realisiert ist und dass die Breite (72) der Nuten (18) zwischen den Stegen (20) über den Verlauf der Wendel (12) betrachtet insbesondere konstant ist.

5. Bohrer nach einem der vorhergehenden Ansprüche, **dadurch gekennzeichnet, dass** die Wendelsteigung und die Stegbreite (24,26) über den Verlauf der Wendel (12) betrachtet an deren schaftseitigem Ende (14) am größten ist.

6. Bohrer nach einem der vorhergehenden Ansprüche, **dadurch gekennzeichnet, dass** die Wendel im Bereich des Schaftendes, insbesondere im rückwärtigen Drittel der Wendel (12), eine größere Stegbreite (26) als am kopfseitigen Ende aufweist, insbesondere eine etwa doppelt so große.

7. Bohrer nach einem der vorhergehenden Ansprüche, **dadurch gekennzeichnet, dass** die Stegbreite (24) vor der Zunahme mindestens teilweise konstant ist und die Zunahme auf die mindestens eineinhalbfache Stegbreite (26) innerhalb von höchstens zwei Gängen, insbesondere innerhalb eines Gangs erfolgt.

8. Bohrer nach einem der vorhergehenden Ansprüche, **dadurch gekennzeichnet, dass** über den Verlauf der Wendel (12) betrachtet mit der Zunahme der Stegbreite (24,26) die Kernverstärkung (22) proportional hierzu eine Querschnittverringerung erfährt und insbesondere schlanker wird.

9. Bohrer nach einem der vorhergehenden Ansprüche, **dadurch gekennzeichnet, dass** der Radius (40,42) der Kernverstärkung (22) über den Verlauf der Wendel (12) hinweg zum einspannseitigen Ende (14) hin geringer wird und insbesondere dem einspannseitigen Ende (14) benachbart die Radiusänderung zwischen dem höchsten Punkt im Zentrum (60) der Kernverstärkung (22) und den Flanken der Kernverstärkung (22) größer ist als am bohrerkopfseiten Ende der Spirale.

10. Bohrer nach einem der vorhergehenden Ansprüche, **dadurch gekennzeichnet, dass** die Änderung der Kernverstärkung (22) an der Vorlaufflanke (48) der Kernverstärkung (22) und der Rücklaufflanke (46) der Kernverstärkung (22) symmetrisch erfolgt, und dass die Kernverstärkung (22) über den Verlauf der Wendel (12) sich symmetrisch ändert.

11. Bohrer nach einem der vorhergehenden Ansprüche, **dadurch gekennzeichnet, dass** Flanken (46,48) und Hohlkehlen (52,54) der Bohrmehlabführnut (18) auch bei sich ändernder Kernverstärkung (22) je symmetrisch zu dem je benachbarten Steg (20) der Wendel (12) übergehen, insbesondere in einem Auslaufwinkel (30,32) zwischen 60 und 80 Grad, bevorzugt etwa zwischen 70 und 75 Grad.

12. Bohrer nach einem der vorhergehenden Ansprüche, **dadurch gekennzeichnet, dass** die Kernverstärkung (22) im Längsschnitt des Bohrers (10) betrachtet am Schaftende (14) zwischen seitlichen Hohlkehlen (52,54) einen im wesentlichen parabolischen Verlauf aufweist

## Claims

1. A drill bit having a drill helix (12), in which mutually symmetrical ridges (20) helically extend around a core, grooves (18) being left between the ridges (20), the width (72) of which grooves exceeds the back width (24) of the ridges (20), and the grooves (18) having a convex core reinforcement (22) at their groove base, **characterized In that** the width (24) of the ridges (20) at the drill's head-side end (16) is smaller than at the shank-side end (14) of the helix (12) and increases at least in certain regions, and **in that** the core reinforcement (22) at the drill's head-side end (16) has a larger cross-section than at the shank-side end (14), especially has larger radii (40, 42) and is more ball-shaped.

2. The drill bit according to claim 1, **characterized In that** the core reinforcement (22) of the drill bit (10) has a substantially constant radius (40, 42) over its course within the drill dust discharge groove (18) In the region of the drill head.

3. The drill bit according to one of the preceding claims, **characterized in that** the core reinforcement (22) has variable radii (40, 42) over its course in the region of the shank end (14) of the drill bit (10), the radius (40) being minimal at the center of the core reinforcement (22) and increasing on the two flanks of the core reinforcement (22) extending from the center (60).

4. The drill bit according to one of the preceding claims, **characterized in that** the helical pitch increasing towards the end (14) on the drill shank-side is exclusively realized by increasing the ridge width (24, 26), and **in that** the width (72) of the grooves (18) between the ridges (20) is especially constant, as viewed over the course of the helix (12).

5. The drill bit according to one of the preceding claims, **characterized in that** the helix pitch and the ridge width (24, 26) Is maximal at the shank-side end (14) thereof, as viewed over the course of the helix (12),

6. The drill bit according to one of the preceding claims, **characterised in that** the helix, in the region of the shank end, especially In the rear third of the helix (12), has a larger ridge width (26) than at the head-side end, especially one that approximately is twice as large.

7. The drill bit according to one of the preceding claims, **characterized in that** the ridge width (24) is at least partially constant before increasing, and increasing to at least one and a half times of the ridge width (26) occurs within at most two pitches, especially within one pitch.

8. The drill bit according to one of the preceding claims, **characterized In that**, while increasing the ridge width (24, 26), the core reinforcement (22) undergoes reduction of cross-section proportional thereto and especially becomes slimmer, as viewed over the course of the helix (12).

9. The drill bit according to one of the preceding claims, **characterized in that** the radius (40, 42) of the core reinforcement (22) becomes smaller over the course of the helix (12) towards the clamp-side end (14), and especially the radius change between the highest point at the center (60) of the core reinforcement (22) and the flanks of the core reinforcement (22) adjacent to the clamp-side end (14) is greater than at the drill's head-side end of the helix.

10. The drill bit according to one of the preceding claims, **characterized In that** the change in the core reinforcement (22) occurs symmetrically at the leading edge (48) of the core reinforcement (22) and the return edge (46) of the core reinforcement (22), and **In that** the core reinforcement (22) symmetrically changes over the course of the helix (12).

11. The drill bit according to one of the preceding claims, **characterized in that** flanks (46, 48) and hollow grooves (52, 54) of the drill dust discharge groove (18) each symmetrically merge Into the respective adjacent ridge (20) of the helix (12), especially at an outlet angle (30, 32) of between 60 and 80 degrees, preferably approximately between 70 and 75 degrees, even when changing core reinforcement (22).

12. The drill bit according to one of the preceding claims, **characterized in that** the core reinforcement (22), as viewed In the longitudinal section of the drill bit (10), has a substantially parabolic course at the shaft end (14) between lateral hollow grooves (52, 54).

## Revendications

1. Perceuse avec une hélice de perçage (12), dans laquelle des entretoises (20) symétriques les unes par rapport aux autres s'étendent en forme de spirale autour d'un noyau, où des rainures (18) se trouvent entre les entretoises (20), dont la largeur (72) dépasse la largeur du dos (24) des entretoises (20) et où les rainures (18) présentent dans leur fond de rainure un renfort du noyau (22) convexe, **caractérisée en ce que** la largeur (24) des entretoises (20) à l'extrémité située du côté de la tête de perçage (16), est inférieure à celle à l'extrémité située du côté de la tige (14) de l'hélice (12) et s'élargit au moins par réglons et que le renfort du noyau (22) à l'extrémité située du côté de la tête de perçage (16) présente une section transversale supérieure à celle de l'extrémité située du côté de la tige (14), en particulier présente des rayons plus grands (40, 42) et est plus arrondi.

2. Perceuse selon la revendication 1, **caractérisé en ce que** le renfort du noyau (22) du foret (10) dans la région de la tête de forage présente un rayon essentiellement constante (40,42) sur son parcours à l'intérieur de la rainure d'évacuation de la poussière de perçage (18).

3. Perceuse selon l'une des revendications précédentes, **caractérisée en ce que** le renfort du noyau (22) dans la région de l'extrémité de la tige (14) de la perceuse (10) présente des rayons variables (40,42) sur son parcours, où le rayon (40) atteint son plus petit niveau au centre du renfort du noyau (22) et il augmente à partir du centre (60) sur les deux flancs du renfort du noyau (22).

4. Perceuse selon l'une des revendications précédentes, **caractérisée en ce que** l'augmentation de l'inclinaison de l'hélice vers l'extrémité située du côté de la tête de perçage (14) est réalisée exclusivement par l'augmentation de la largeur des entretoises (24,26) et que la largeur (72) des rainures (18) entre les entretoises (20) est en particulier constante sur le cours de l'hélice (12).

5. Perceuse selon l'une des revendications précédentes, **caractérisée en ce que** l'inclinaison de la spirale et la largeur des entretoises (24, 26) sur le cours de l'hélice (12) est à son niveau maximal à son extrémité située du côté de la tige (14).

6. Perceuse selon l'une des revendications précédentes, **caractérisée en ce que** la largeur des entretoises (26) de l'hélice à son extrémité située du côté de la tige, en particulier dans le tiers postérieur de l'hélice (12), est supérieure qu'à l'extrémité située du côté de la tête, en particulier environ deux fois supérieure.

7. Perceuse selon l'une des revendications précédentes, **caractérisée en ce que** la largeur des entretoises (24) avant l'augmentation est au moins partiellement constante et l'augmentation à une largeur de entretoise d'au moins une fois et demie se produit (26) en un maximum de deux cours, en particulier en un cours.

8. Perceuse selon l'une des revendications précédentes, **caractérisée en ce que** sur le cours de l'hélice (12) perçue avec l'augmentation de la largeur des entretoises (24,26) le renfort du noyau (22) subit une baisse de sa section transversale proportionnelle et en particulier devient plus mince.

9. Perceuse selon l'une des revendications précédentes, **caractérisée en ce que** le rayon (40,42) du renfort du noyau (22) sur le cours de l'hélice (12) vers l'extrémité insérable(14), et en particulier attenant à l'extrémité insérable (14) le changement de rayon entre le point le plus élevé dans le centre (60) du renfort du noyau (22) et les flancs du renfort du noyau (22) est supérieur à celui à l'extrémité située du côté de la tête de perçage du spirale (22).

10. Perceuse selon une des revendications précédentes, **caractérisée en ce que** le changement du renfort du noyau (22) sur le flanc d'avancé (48) du renfort du noyau (22) et le flanc de retour (46) du renfort du noyau (22) se produit de manière symétrique et que le renfort du noyau (22) su le cours de l'hélice (12) change de manière symétrique.

11. Perceuse selon l'une des précédentes revendications, **caractérisée en ce que** des flancs (46,48) et des gorges (52,54) de la rainure d'évacuation de poussière de forage (18), même en cas de renfort de noyau (22) changeant, passent respectivement de manière symétrique à la entretoise adjacente (20) de l'hélice (12), en particulier à un angle de sortie (30,32) entre 60 et 80 degrés, de préférence entre 70 et 75 degrés approximativement.

12. Perceuse selon l'une des revendications précédentes, **caractérisée en ce que** le renfort du noyau (22) présente un cours essentiellement parabolique vu depuis la section longitudinale de la perceuse (10) à l'extrémité de la tige (14) entre les gorges latérales (52,54).
